# EUROPEAN PATENT SPECIFICATION

(11) **EP 1 918 624 B1**
(45) Date of publication and mention of the grant of the patent: **12.05.2010**
(21) Application number: 07118453.5
(22) Date of filing: 15.10.2007
(51) Int. Cl.: F16L 3/137, F16L 33/035

(54) **Protection element for pump mounting brackets**
Schutzelement für Pumpenhalterung
Élément de protection pour support de montage de pompe

(30) Priority: 30.10.2006 IT VI20060319
(43) Date of publication of application: 07.05.2008
(73) Proprietor: CALPEDA S.p.A., I-36050 Montorso Vicentino (VI) (IT)
(72) Inventor: Kistner, André, 35031, Abano Terme (PD) (IT)
(74) Representative: Bonini, Ercole

(56) References cited:
- EP-A- 1 486 679
- WO-A-2004/098011
- DE-A1- 2 733 990
- GB-A- 1 291 172
- GB-A- 1 567 852
- US-A- 4 273 367
- US-A- 4 547 953

## Description

The present invention concerns a removable protection element to be applied to motor-pump mounting brackets in monobloc pumps, particularly suitable for centrifugal pumps.

Pump mounting brackets are provided with a protection element as an accident prevention measure to avoid contact with the rotating shaft.

These protection elements usually comprise two shaped parts, obtained by moulding, arranged according to the profile of their openings, and each one of them is fixed via two screws to threaded holes present in the bracket; therefore, upon assembly it is necessary to make four holes manually, each in a different direction.

Other embodiments including the application of protection elements with elastic joints in the bracket openings without using screws, are not in compliance with the safety standards according to which protection elements must be able to be removed only using special tools.

For the protection elements of standard pumps, as those of the type considered herein, even one threaded hole only is relatively costly to make during the machining operations, above all when it must be made crosswise with respect to the axis of the holes and to the axis of the other machined parts on the front of the bracket.

Other protection elements comprising a perforated plate strip, curved in the shape of a cylindrical mantle, have the ends bent at right angles towards the outside.

In this embodiment the mantle is fastened by tangential tightening of the two bent ends, by means of two screws with nut.

According to other examples of execution, such as patent EP 1486679, the protection element is fixed using at least one screw.

One object of the present invention is to develop a protection element that is simple to manufacture in a single piece, without bends at the ends.

A further object of the invention is to obtain a protection element without cutting edges or edges that project towards the outside, such as to cause injury in case of accidental contact.

Another object of the invention is to obtain a protection element that can be fixed without using screws and that in any case complies with the safety standards, according to which protection elements must be able to be removed only using a special tool, without making threaded holes in the bracket and without machining the seat of the protection element.

Another object of the invention is to obtain a protection element having a reduced cost.

The objects mentioned above and others that will be highlighted in greater detail in the description have been achieved through the construction of a removable protection element whose main characteristics are in accordance with the first claim.

The objects of the invention can be achieved with a removable protection element that can have a smooth surface or be provided with holes.

The preferred embodiment of the invention is perforated, in fact it is more flexible and makes it possible to check visually if the protection element is firmly fastened to the shaft, while leaving it applied to the running pump.

The holes can be provided in any shape and number. Square or circular holes are preferred due to the simple structure of the mould required.

Advantageously, the protection element is carried out in a single piece without bends at the ends, without cutting edges facing outwards, and is fixed without making threaded holes in the bracket.

According to the invention, the protection element is removed by inserting a suitably shaped tool in the recess made in one of the two ends of the protection element itself.

The insertion of the tool allows the anchorage device to be raised in such a way as to create a clearance between the teeth present on the tab and those present on the housing, and this clearance allows the tab or tabs to be withdrawn from its/their seat.

The objects and advantages described above will be highlighted in greater detail in the description of a preferred embodiment of the invention that is supplied as an indicative, non-limiting example with reference to the enclosed drawings, wherein:
- Figure 1 shows a prospectic view of the protection element of the invention in its flat configuration before it is wound on the bracket (continuous lines) and in the curved configuration once it has been wound on the bracket (dashed-dotted line);
- Figure 2 shows the detail of the fastening of the protection element of Figure 1 to the ends;
- Figure 3 shows a longitudinal cross section of the detail of the protection element of Figure 1 and of its seat on the bracket;
- Figure 4 shows a longitudinal cross section of the protection element of Figure 1 while it is withdrawn using a tool;
- Figure 5 shows the protection element of Figure 1 wound on a motor-pump mounting bracket.

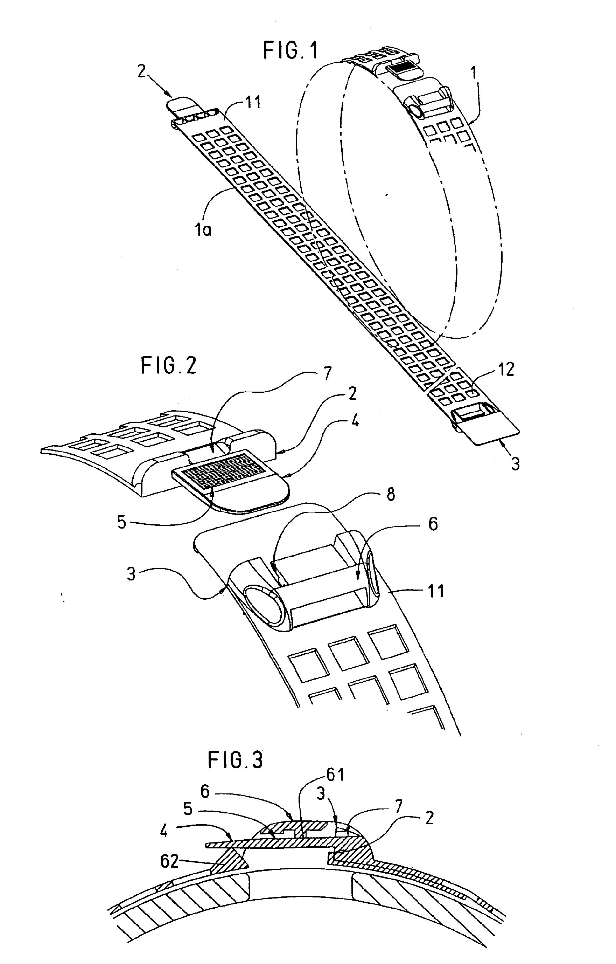

Figure 1 shows the protection element carried out according to the invention, which is indicated by **1** when it is wound (dashed-dotted lines) and by **1a** before winding (continuous lines).

The protection element carried out according to the invention comprises a strip **11** made of a thermoplastic material, preferably but not necessarily perforated.

In the preferred embodiment of the invention the protection element is perforated since, as already mentioned, it is more flexible and makes it possible to check visually if the protection element is firmly fastened to the shaft, while leaving it applied to the running pump.

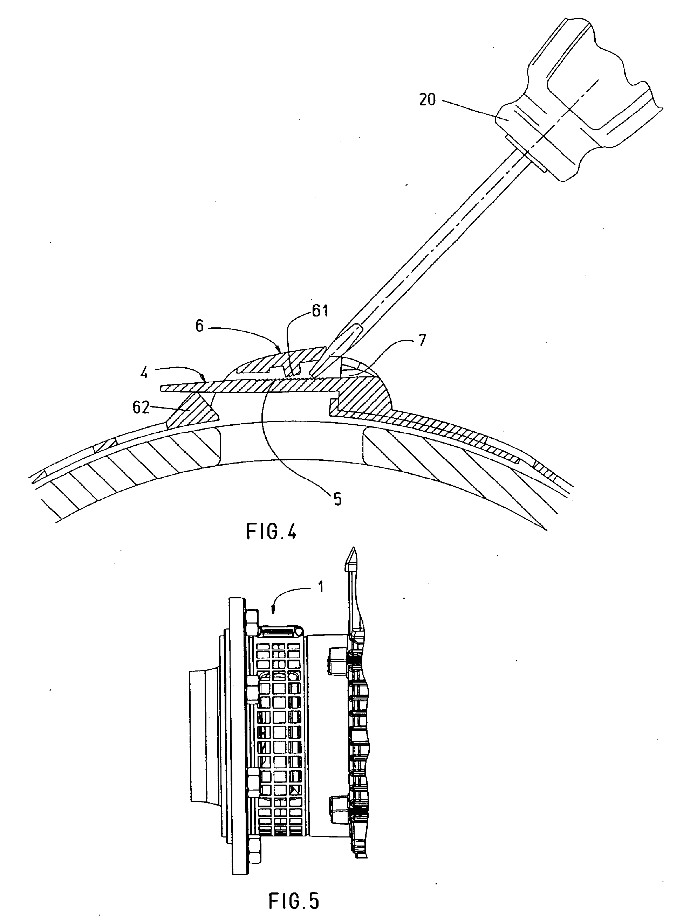

Figure 1 shows that the protection element **1a** is provided with a plurality of square holes **12** and that it will be wound for at least 360° on a substantially cylindrical external surface belonging to a motor-pump mounting bracket (as shown in Figure 5).

In the embodiment shown in the figures, the holes have a square shape but, as already mentioned, they can also have other shapes, for example they can be cylindrical or hexagonal, since the shape of the hole is uninfluential for the purposes of the present invention.

Figure 2 shows that the strip **11** of the protection element carried out according to the invention is provided with two ends, **2** and **3** respectively, which are properly shaped.

A tab **4** having a toothed area **5** on its upper surface projects from the end **2.**

The other end **3** is provided with a housing **8,** whose bottom is defined by the upper surface of the strip **11,** while its top is defined by a buckle **6.**

The housing **8** is suitable for receiving the terminal part of the tab **4,** belonging to the other end, which snaps in said housing **8.**

In particular, a part of the toothed area **5** engages in a corresponding conjugated profile **61** present on a projection of the buckle **6** that defines such a space as to allow the tab **4** to pass through when the protection element **1a** is closed.

Thanks to the elasticity of the plastic material of which the protection element **1a** is made, the tab **4** remains locked in its seat, resting against the buckle **6.**

It is important to notice that when the tab **4** is fitted in the housing **8,** the end of the tab **4** rests on the support **62** belonging to the end **3,** visible in Figure 4.

This is important for safety purposes, since a tool that tends to press the tab **4** to release the teeth **5** of the tab **4** and the teeth **61** of the buckle **6** cannot do that due to the presence of the support **62.**

The protection element is conveniently moulded in a single mould, in such a way as to obtain a protection element that constitutes a single body with the two shaped ends, as indicated above.

As already mentioned above, moulding is carried out in a single piece and in this way the use of different components can be avoided.

The presence of a rather large toothed area 5 makes it possible to adjust the closing of the bracket protection element, in such a way as to make up for the variation in diameter of the bracket itself due to the variation of dimensional tolerances.

In the sectional view shown in Figure 3 it is possible to see the ends **2** and **3** coupled to each other.

The protection element **1** of the mounting bracket is released by means of a tool, for example a screwdriver **20** (shown in Figure 4), whose tip is introduced in a recess **7** delimited by two lowered areas of the end **2** of the protection element **1a.**

The insertion of the tool allows the buckle **6** to be raised from the housing **8,** in such a way as to create a clearance between the toothed area **5** of the tab **4** and the bucket **6** of the housing **8.**

The clearance created in this way between the toothed area **5** and the buckle **6** causes the withdrawal of the tab **4.**

It is important to notice that the tip of the tool **20** moves in such a way as to raise the buckle **6** to detach it from the tab **4** with an upward movement of the buckle **6.**

Pushing the tab **4** downward would be ineffective, in fact any further movement would be prevented by the presence of the support **62** mentioned above.

The need to use a screwdriver or a similar tool to release the protection element **1** depends on the regulations on safety requirements, according to which protection elements must be able to be removed only with the aid of a tool.

As already explained, the protection element carried out according to the invention uses neither screws nor machined parts, with evident savings.

Furthermore, the protection element of the invention, having neither cutting edges nor edges that project outwards, does not represent a risk of injury for anyone in the vicinity.

Furthermore, the installation of the protection element of the invention becomes considerably quicker compared to the protection elements of known type, as well as involving much lower costs thanks to the possibility of obtaining a protection element for mounting brackets in a single shaped piece.

In the execution stage variants of the protection element for mounting brackets of the invention can be carried out that are neither described nor represented herein.

Said variants must all be considered protected by the present patent, provided that they fall within the scope of the claims expressed below.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Removable protection element (1, 1 a) for motor-pump mounting brackets for monobloc centrifugal pumps, comprising a substantially laminate strip (11) *windable* for at least 360° around said mounting brackets, *said* strip (11) *having* one end *(2)* in the shape of a tab (4), suited to snap in a corresponding housing (8) obtained on the surface of the other end (3) of said strip (11), ***characterised in that** it comprises a recess (7) provided in one of said ends (2, 3) of said strip (11), suitable to receive the insertion of a tool for the release of said tab (4).*

2. Protection element (1, 1 a) according to claim 1), **characterised in that** the lower surface of said at least one tab (4) is provided with a toothed area (5).

3. Protection element (1, 1 a) according to claim 1), **characterised in that** the bottom of said housing (8) for said at least one tab (4) is defined by the surface of said strip (11), while its top is defined by the projecting part (61) of a buckle (6).

4. Protection element (1, 1a) according to claim 3), **characterised in that** said projecting part (61) of said buckle (6) has a toothing suited to be conjugated with the corresponding toothing present on said toothed area (5) of said at least one tab (4).

5. Protection element (1, 1 a) according to claim 1), **characterised in that** said at least one tab (4) rests on a support (62) belonging to said end (3) provided with said housing (8).

6. Protection element (1, 1a) according to any of the preceding claims, **characterised in that** said strip (11) is provided with a plurality of holes (12).

7. Protection element (1, 1a) according to any of the preceding claims, **characterized in that** it is made of a moulded thermoplastic material.

8. Protection element (1, 1a) according to any of the preceding claims, **characterised in that** it is made in a single piece.

## Patentansprüche

1. Abnehmbares Schutzelement (1, 1a) für Motor-Pumpe-Antriebslaternen für Kreiselpumpen in Blockbauweise, umfassend einen im Wesentlichen dünnlagigen Streifen (11), der um mindestens 360° um die Antriebslaternen wickelbar ist, wobei der Streifen (11) ein Ende (2) in der Form einer Lasche (4) aufweist, die dazu geeignet ist, in ein entsprechendes Gehäuse (8) einzuschnappen, das an der Oberfläche des anderen Endes (3) des Streifens (11) ausgebildet ist, **dadurch gekennzeichnet, dass** es eine Ausnehmung (7) umfasst, die in einem der Enden (2, 3) des Streifens (11) bereitgestellt ist und dazu geeignet ist, die Einführung eines Werkzeugs zum Lösen der Lasche (4) aufzunehmen.

2. Schutzelement (1, 1a) nach Anspruch 1), **dadurch gekennzeichnet, dass** die untere Oberfläche der mindestens einen Lasche (4) mit einem gezahnten Bereich (5) versehen ist.

3. Schutzelement (1, 1a) nach Anspruch 1), **dadurch gekennzeichnet, dass** das Gehäuse (8) für die mindestens eine Lasche (4) bodenseitig von der Oberfläche des Streifens (11) definiert ist, während es deckenseitig vom vorstehenden Abschnitt (61) einer Schnalle (6) definiert ist.

4. Schutzelement (1, 1a) nach Anspruch 3), **dadurch gekennzeichnet, dass** der vorstehende Abschnitt (61) der Schnalle (6) eine Zahnung aufweist, die dazu geeignet ist, mit der entsprechenden Zahnung, die am gezahnten Bereich (5) der mindestens einen Lasche (4) vorhanden ist, gepaart zu werden.

5. Schutzelement (1, 1a) nach Anspruch 1), **dadurch gekennzeichnet, dass** die mindestens eine Lasche (4) auf einem Auflager (62) aufliegt, das zum Ende (3) gehört, das mit dem Gehäuse (8) ausgestattet ist.

6. Schutzelement (1, 1 a) nach einem der vorangegangenen Ansprüche, **dadurch gekennzeichnet, dass** der Streifen (11) mit einer Vielzahl an Löchern (12) versehen ist.

7. Schutzelement (1, 1a) nach einem der vorangegangenen Ansprüche, **dadurch gekennzeichnet, dass** es aus einem geformten thermoplastischen Material hergestellt ist.

8. Schutzelement (1, 1a) nach einem der vorangegangenen Ansprüche, **dadurch gekennzeichnet, dass** es einstückig ausgebildet ist.

## Revendications

1. Protection amovibile (1, 1a) pour lanternes de raccordement moteur-pompe pour pompes centrifuges monoblocs, comprenant une bande (11) essentiellement laminaire enroulable pour au moins 360° autour desdites lanternes de raccordement, ladite bande (11) ayant une extrémité (2) en forme de languette (4), indiquée pour s'engager avec déclic dans un logement correspondant (8) otbtenu sur la surface de l'autre extrémité (3) de ladite bande (11), **caractérisée en ce qu'**elle comprend un creux (7) prévu sur une desdites extrémités (2, 3) de ladite bande (11), indiqué pour recevoir l'insertion d'un outil pour le relâchement de ladite languette (4).

2. Protection (1, 1 a) selon la revendication 1), **caractérisée en ce que** la surface inférieure de ladite au moins une languette (4) est munie d'une zone dentée (5).

3. Protection (1, 1a) selon la revendication 1), **caractérisée en ce que** la partie inférieure dudit logement (8) pour ladite au moins une languette (4) est définie par la surface de ladite bande (11), alors que sa partie supérieure est définie par la partie saillante (61) d'une boucle (6).

4. Protection (1, 1a) selon la revendication 3), **caractérisée en ce que** ladite partie saillante (61) de ladite boucle (6) présente une denture indiquée pour être réunie avec la denture correspondante présente sur ladite zone dentée (5) de ladite au moins une languette (4).

5. Protection (1, 1a) selon la revendication 1), **caractérisée en ce que** ladite au moins une languette (4) repose sur un support (62) appartenant à ladite extrémité (3) dotée dudit logement (8).

6. Protection (1, 1a) selon l'une quelconque des revendications précédentes, **caractérisée en ce que** ladite bande (11) est dotée d'une pluralité de trous (12).

7. Protection (1, 1a) selon l'une quelconque des revendications précédentes, **caractérisée en ce qu'**elle est réalisée en matériel thermoplastique moulé.

8. Protection (1, 1a) selon l'une des revendications précédentes, **caractérisée en ce qu'**elle est réalisée en une pièce unique.
